# EUROPEAN PATENT APPLICATION

(11) **EP 3 828 229 A1**
(43) Date of publication of application: **02.06.2021**
(21) Application number: 20203799.0
(22) Date of filing: 26.10.2020
(51) Int. Cl.: C08K 3/26, C08K 5/29, C08L 67/04

(54) **A BIOPOLYMER COMPOUND AND A REFRIGERATOR COMPRISING AN EGG TRAY PRODUCED FROM BIOPOLYMER**

(30) Priority: 18.11.2019 TR 201917960
(71) Applicant: Arçelik Anonim Sirketi, 34445 Istanbul (TR)
(72) Inventor: DEMIRTAS, Emre, 34445 ISTANBUL (TR); KAYMAKCI, Orkun, 34445 ISTANBUL (TR); TUTAL, Fatih, 34445 ISTANBUL (TR)

(57) **Abstract**

The present invention relates to a biopolymer compound comprising polylactic acid or polylactic acid based biopolymer and eggshell powder, and to a refrigerator comprising an egg tray produced from said compound.

## Description

The present invention relates to a biopolymer compound, an egg tray produced from said biopolymer and a refrigerator comprising said egg tray.

Plastics which are widely known and used today are derived from fossil fuels such as oil, coal, etc. Increasing environmental concerns in recent years and objectives such as increasing independence for petrochemical raw materials have increased the tendency to renewable raw materials in the industry.

Biopolymers, in other words bioplastics, are plastics obtained from renewable biological sources such as vegetable fats and oils, plant starches or microorganisms. Many types of bioplastics are biodegradable and self-decompose in nature in the course of time. Polylactic acid (PLA), produced from corn starch or sugar cane, is also the most well-known type of bioplastics.

Moreover, it is a widely known technique to improve the mechanical properties of the biopolymer by adding various organic wastes to biopolymers. In Turkey, approximately 16 billion eggs are consumed annually, and 100,000 tons of eggshell are discarded. In the USA, 150,000 tons of eggshell are discarded just in the food industry. In the world, the evaluation of said eggshell waste, which creates very high amounts of waste and also odor pollution, is very important in terms of environmental sustainability.

Today, the use of waste eggshell as an additive in various biobased polymers is known. However, corn starch-based PLA polymer is sensitive to moisture and hydrolyzes in a humid environment. Due to its nature, waste eggshells leave moisture in the polymer when processed with polylactic acid, causing the polymer to degrade and become brittle. Therefore, it becomes difficult to compatibilize the eggshell and the polylactic acid without an additive.

The state of the art European Patent Document No. EP2814879B1 discloses a material compound comprising polylactic acid and at least one carbodiimide-based stabilizer, and building components (door, etc.) produced from said material.

The state of the art Chinese Patent Application No. CN103183937 discloses a material compound comprising polylactic acid and eggshell powder, and the preparation method thereof.

The aim of the present invention is the realization of a biopolymer compound comprising a biobased polylactic acid with high mechanical strength and hydrolytic stability, and a refrigerator comprising an egg tray produced from said biopolymer compound.

By using biobased PLA polymer, waste eggshell and hydrolytic stabilizer in the same formulation, bioplastic produced from renewable natural resources is used instead of petroleum-based plastics, waste natural eggshells are converted into added value and long-lasting environmentally friendly egg trays are produced.

Waste eggshells are pretreated to prevent bacterial growth and are kept in the vacuum oven at 80°C.

The waste eggshells in the biopolymer of the present invention are milled and pulverized with particle sizes varying between 0.5 - 1 mm. Afterwards, the pulverized material is kept in the vacuum oven at 80°C for approximately three hours and possible bacterial formation is prevented. The pretreated eggshell powder, PLA and hydrolytic stabilizer are produced in the extruder device and the final formulation produced in granule form is used in the plastic injection process to produce egg tray parts.

In other embodiments of the present invention, components such as refrigerator shelf, drawer, etc. can also be produced from the biopolymer of the present invention.

In the present invention, the waste eggshells are converted into added value and used as an additive in the biobased polylactic acid polymer, and the 100% biobased egg tray used in the refrigerators is produced. The produced egg tray has superior hydrolytic stability and high mechanical properties and is suitable for mass production.

By means of the present invention, a biopolymer compound with superior hydrolytic stability and high mechanical strength and an egg tray produced from said compound are realized.

The biopolymer of the present invention comprises polylactic acid or polylactic acid based biopolymer mixture, eggshell powder and a hydrolytic stabilizer containing one or more carbodiimide groups. Thus, the polylactic acid sensitive to moisture is compatibilized with the eggshell powder by preventing hydrolysis.

In an embodiment of the present invention, the biopolymer compound comprises polylactic acid and poly (butylene adipate-co-terephthalate) and/or polylactic acid and polyhydroxybutarate as polylactic acid-based main carrier polymer.

In an embodiment of the present invention, the carbodiimide bis (2,6-diisopropylphenyl) stabilizer is used as a stabilizer with a carbodiimide group. The stabilizer containing the carbodiimide group prevents the hydrolysis of the polymer by binding with the water molecules trapped in the eggshell powder. Thus, a non-fragile biopolymer with increased mechanical strength is obtained.

The results of the experiments where the mechanical strength of polylactic acid based biopolymer with added stabilizer having one or more carbodiimide groups are given in the table below.

### Table 1. Mechanical strength test results of biopolymer compound

**Table 1**

| | PLA | PLA/Eggshell powder | PLA/Eggshell powder/Stabilizer |
|---|---|---|---|
| E Modulus (MPa) | 3742 | 4705 | 4956 |
| Izod impact strength (kJ/m²) | 3.3 | 3.8 | 4.4 |

In an embodiment of the present invention, the compound comprises a binding agent, preferably maleic anhydride-grafted polypropylene, which compatibilizes the surface energies of the biopolymer and eggshell powder. Since the polymer and the organic additive eggshell powder have different surface energies, the biopolymer compound is compatibilized by using a binding agent.

In an embodiment of the present invention, the biopolymer compound comprises 60% to 90% polylactic acid based biopolymer mixture by weight, 9% to 40% eggshell powder by weight, 0.1% to 1% carbodiimide based hydrolytic stabilizer by weight, and 0.1% to 4% binding agent by weight.

In an embodiment of the present invention, eggshell powder with a particle size between 0.5 to 1 mm is used.

An egg tray is produced from the biopolymer compound of the present invention. Said egg tray is used in the refrigerators. Thus, a refrigerator is realized, comprising an environmentally-friendly and biodegradable egg tray with high hydrolytic stabilization wherein especially waste egg shells are used.

By means of the present invention, with the developed biopolymer formulation, the E modulus and impact strength values are improved, the hydrolytic strength and service life are increased, and polylactic acid and eggshell powder, which cannot be processed with each other, are compatibilized and used together.

## Claims

1. A biopolymer compound comprising polylactic acid or polylactic acid based biopolymer mixture and eggshell powder, **characterized by** a hydrolytic stabilizer containing one or more carbodiimide groups.

2. A biopolymer compound as in Claim 1, **characterized by** comprising polylactic acid and poly (butylene adipate-co-terephthalate) and/or polylactic acid and polyhydroxybutarate mixtures.

3. A biopolymer compound as in Claim 1 or 2, **characterized by** carbodiimide bis(2,6-diisopropylphenyl) stabilizer.

4. A biopolymer compound as in any one of the above claims, **characterized by** a binding agent, preferably maleic anhydride-grafted polypropylene, which compatibilizes the surface energies of the biopolymer and eggshell powder.

5. A biopolymer compound as in any one of the above claims, **characterized by** 60% to 90% polylactic acid based biopolymer mixture by weight, 9% to 40% eggshell powder by weight, 0.1% to 1% carbodiimide based hydrolytic stabilizer by weight, and 0.1% to 4% binding agent by weight.

6. A biopolymer compound as in any one of the above claims, **characterized by** eggshell powder with a particle size between 0.5 to 1 mm is used.

7. An egg tray produced from a biopolymer as in any one of the above claims.

8. A refrigerator comprising an egg tray as in Claim 7.
